# EUROPÄISCHE PATENTSCHRIFT

(11) **EP 3 394 569 B1**
(45) Veröffentlichungstag und Bekanntmachung des Hinweises auf die Patenterteilung: **05.05.2021**
(21) Anmeldenummer: 17701681.3
(22) Anmeldetag: 23.01.2017
(51) Int. Cl.: G01C 21/34, G05D 1/02

(54) **VERFAHREN ZUM BETREIBEN EINES EIN FAHRZEUG UND EINE FAHRZEUGEXTERNE RECHENEINRICHTUNG UMFASSENDEN NAVIGATIONSSYSTEMS, FAHRZEUG UND RECHENEINRICHTUNG**
METHOD FOR OPERATING A NAVIGATION SYSTEM COMPRISING A VEHICLE AND A COMPUTING DEVICE OUTSIDE THE VEHICLE, VEHICLE AND COMPUTING DEVICE
PROCÉDÉ DE FONCTIONNEMENT D'UN SYSTÈME DE NAVIGATION ENGLOBANT UN VÉHICULE ET UN DISPOSITIF DE CALCUL EXTERNE AU VÉHICULE, VÉHICULE ET DISPOSITIF DE CALCUL

(30) Priorität: 18.02.2016 DE 102016001907
(43) Veröffentlichungstag der Anmeldung: 31.10.2018
(73) Patentinhaber: Audi AG, 85045 Ingolstadt (DE)
(72) Erfinder: ROTH, Erwin, 85283 Wolnzach (DE); LENZ, David, 80335 München (DE); MINNERUP, Pascal, 80333 München (DE); CHEN, Chao, 94086 CA, Sunnyvale (US)
(86) Internationale Anmeldenummer: PCT/EP2017/051302
(87) Internationale Veröffentlichungsnummer: WO 2017/140461

(56) Entgegenhaltungen:
- DE-A1- 10 030 819
- DE-A1-102010 033 215
- DE-A1-102011 084 124
- US-A- 5 689 252
- US-A1- 2010 228 471
- US-A1- 2010 228 471
- US-A1- 2013 124 073
- US-A1- 2013 124 073

## Beschreibung

Die Erfindung betrifft ein Verfahren zum Betreiben eines ein Fahrzeug und eine fahrzeugexterne Recheneinrichtung umfassenden Navigationssystems.

Navigationseinrichtungen für Fahrzeuge sind seit langem bekannt. Sie umfassen typischerweise eine digital gespeicherte topographische Karte und eine Positionserfassungseinrichtung und ermöglichen damit eine Navigationsführung in einem öffentlichen Straßennetz. Typischerweise beinhaltet die topographische Karte auch Koordination von sogenannten Orten von Interesse (Points of Interest), welche Waschanlagen, Werkstätten, Tankstellen, Restaurants und dergleichen beschreiben können. Damit lässt sich zwar eine Navigationsroute zu einem solchen Ort von Interesse leicht berechnen, allerdings gelangt das Fahrzeug damit typischerweise nur zu einer angenäherten Position des jeweiligen Ortes, beispielsweise zu einer Einfahrt. Eine Navigation innerhalb beispielsweise einer Tankstelle zu einer bestimmten Zapfsäule oder gar einer bestimmten Zapfpistole ist mit herkömmlichen Navigationseinrichtungen nicht möglich, da die hierfür erforderliche Speicherkapazität von derart hochaufgelösten topographischen Kartendaten typischerweise nicht im Fahrzeug vorhanden ist.

Es wurde bereits vorgeschlagen, einem Fahrzeug beim Einfahren in ein Parkhaus detaillierte Kartendaten über das gesamte Parkhaus zu übermitteln. So offenbart die DE 10 2010 033 215 A1 ein Verfahren zur Unterstützung eines Einparkvorgangs in einem Parkhaus unter Verwendung eines Einparksystems in einem Fahrzeug. Dabei werden dem Einparksystem bei der Einfahrt und/oder während des Aufenthalts im Parkhaus Informationen über das Parkhaus bereitgestellt, wobei das Einparksystem durch Auswerten der bereitgestellten Informationen über das Parkhaus Steuerdaten für das Fahrzeug erzeugt und ausgibt, wobei das Fahrzeug basierend auf den Steuerdaten automatisch durch das Parkhaus bewegt und/oder die Steuerdaten als Navigationshinweise an den Fahrer ausgegeben werden.

Dies erfordert jedoch auch die Übertragung von vollständigen, hochaufgelösten topographischen Kartendaten über das Parkhaus an das Fahrzeug, was zum einen hohe Übertragungsbandbreiten und zum anderen das Vorhalten ausreichender Speicherkapazitäten im Fahrzeug erfordert.

US 2010/228471 A1 beschreibt ein Navigationssystem mit einer Methode zur Routenbestimmung, bei der statistische Informationen über die Zeit, welche für einen Streckenabschnitt benötigt wird, eingesetzt werden. Das Navigationssystem umfasst ein kraftfahrzeugseitiges Navigationsgerät sowie eine externe Recheneinheit, welche beide jeweils eine Datenbank mit Karteninformationen aufweisen. Nach dem Starten eines Navigationsvorganges bei bekanntem Zielort wird zunächst die statistische Verkehrsinformation angefordert. Die externe Recheneinrichtung ermittelt daraufhin die Route von der Fahrzeugposition zum Zielgebiet auf Grundlage der in der Datenbank der Recheneinheit gespeicherten Kartendaten, welche entsprechend der Version der Kartendaten des kraftfahrzeugseitigen Navigationsgeräts sowie anhand der der Recheneinrichtung bekannten statistischen Information ausgewählt werden.

US 2013/124073 A1 beschreibt ein Verfahren zur Echtzeitdetektion von Verkehrsüberlastung. Dabei wird, nachdem von einer fahrzeugseitigen Navigationseinrichtung eine Verkehrsüberlastungsinformation an eine externe Recheneinheit übertragen wurde, eine Warnung an andere Verkehrsteilnehmer ausgegeben. Zusätzlich dazu kann die externe Recheneinrichtung, wenn ihr von der fahrzeugseitigen Navigationseinrichtung eine Route und/oder eine geographische Position des Kraftfahrzeugs mitgeteilt worden ist, eine Alternativroute an die fahrzeugseitige Navigationseinrichtung übermitteln.

Aus US 5 689 252 A ist ein Navigationssystem für ein Kraftfahrzeug bekannt, welches als beste Route zwischen dem Startpunkt und einem Zielpunkt die am schnellsten befahrbare Route ermittelt. Dazu werden zunächst mehrere mögliche Routen zum Erreichen des Zielpunktes bestimmt. Die für die Routenbestimmung erforderlichen Kartendaten können dabei im Kraftfahrzeug auf einer CD-ROM gespeichert sein oder von einer externen Datenbank an das Kraftfahrzeug übermittelt werden. Anschließend wird nach einer Längenbestimmung jeder möglichen Route für jede Route eine Geschwindigkeitsrate ermittelt, aus welcher mit Hilfe der Länge der Route eine voraussichtliche Reisezeit für jede Route bestimmt werden kann. Die Route mit der kürzesten Reisezeit wird anschließend als beste Route gewählt. Die zur Ermittlung der voraussichtlichen Dauer der Route notwendigen Geschwindigkeitsinformationen werden über die zentrale Datenbank bestimmt, wobei die von dort an das Kraftfahrzeug übermittelten Verkehrsinformationen neben einer durchschnittlichen Geschwindigkeit der aktuell die entsprechende Route befahrenden Kraftfahrzeuge auch Informationen über Staus, Umleitungen und Sperrungen oder Straßenbeschaffenheiten enthalten können.

DE 100 30 819 A1 beschreibt eine Gefahrenwarnanlage, welche mit einem Navigationssystem kombiniert sein kann, um vor Passierbarkeitsbeschränkungen eines vom Kraftfahrzeug befahrenden Wegabschnittes zu warnen. Diese Daten können bei der Auswahl einer vom Navigationssystem empfohlenen Route berücksichtigt werden.

In DE 10 2011 084 124 A1 wird ein Verfahren zum Navigieren eines Fahrzeuges auf einem Parkplatz beschrieben, bei dem das Fahrzeug Informationen über den Parkplatz von einer als stationäre Recheneinheit ausgebildeten externen Datenquelle erhält und die Information der externen Datenquelle bei der Navigation auf dem Parkplatz berücksichtigt. Die Recheneinheit ist dazu ausgebildet, um statische Parkplatzinformationen an das Kraftfahrzeug zu übermitteln. Anschießend kann das Fahrzeug unter Verwendung entsprechender Fahrerassistenzsysteme unter Berücksichtigung der von der Recheneinheit übermittelten Informationen über den Parkplatz automatisch ein- oder ausgeparkt werden.

Der Erfindung liegt mithin die Aufgabe zugrunde, ein Verfahren zum Betreiben eines Navigationssystems mit einem geringeren Datenübertragungsaufwand zwischen einer Recheneinrichtung und einem Fahrzeug anzugeben.

Diese Aufgabe wird erfindungsgemäß durch ein Verfahren nach Patentanspruch 1 gelöst.

Die Erfindung beruht auf der Überlegung, die Ermittlung der Navigationsroute durch die kraftfahrzeugseitige Navigationseinrichtung auf einer Datenbasis durchzuführen, die in einem mehrstufigen Verfahren an das Fahrzeug von der Recheneinrichtung übertragen wird, wobei der Detaillierungsgrad der Datenbasis mit jeder Stufe steigt. Dazu kann die Navigationseinrichtung die Recheneinrichtung, welche insbesondere wenigstens einen Backendserver umfasst, zunächst auffordern, die Wegnetzdaten an die Navigationseinrichtung zu übertragen. Diese umfassen bevorzugt zumindest teilweise nicht auf einem Datenträger der Navigationseinrichtung gespeicherte topographische Informationen über eine demnächst durch das Fahrzeug zu befahrende Navigationsumgebung. Die Wegnetzdaten können das Wegnetz als Verknüpfungen mehrerer Wegsegmente untereinander beschreiben.

Die Recheneinrichtung kann dann die angeforderten Wegnetzdaten an das Kraftfahrzeug übertragen, wonach die Navigationseinrichtung aus den Wegnetzdaten den wenigstens ein Wegsegment umfassenden Wegsegmentzug ermittelt, welcher zum Erreichen einer Zielposition von einer Startposition aus benötigt wird bzw. erforderlich ist. Mit anderen Worten sucht die Navigationseinrichtung den Wegsegmentzug als ein Wegsegment oder eine Folge von Wegsegmenten, welche innerhalb des Wegnetzes eine mögliche Verbindung von der Startposition zur Zielposition bilden. Selbstverständlich können auch mehrere Wegsegmentzüge ermittelt werden, über die die Zielposition von der Startposition aus erreichbar ist. Es kann insbesondere vorgesehen sein, dass das Fahrzeug an der Zielposition nicht zum Stehen kommt, sondern diese durchfährt.

Anschließend kann die Navigationseinrichtung die Recheneinrichtung auffordern, für wenigstens ein Wegsegment des Wegsegmentzugs Wegsegmentinformationen an die Navigationseinrichtung zu übertragen. Die Wegsegmentinformationen beschreiben ein Wegsegment detaillierter als die Wegnetzdaten. Anschließend kann die Recheneinrichtung die Wegsegmentinformationen an die Navigationseinrichtung übertragen, wonach die Navigationseinrichtung die Passierbarkeit des Wegsegmentzugs für das Fahrzeug unter Berücksichtigung der Wegsegmentinformationen überprüft. Die Überprüfung der Passierbarkeit umfasst insbesondere eine Prüfung auf eine Kollision mit durch die Wegsegmentinformationen beschriebenen Hindernissen und/oder Begrenzungen. Wird ein Wegsegmentzug als passierbar, also kollisionsfrei oder eine Kollision vermeidend, beurteilt, so wird daraus die Navigationsroute abgeleitet.

Das erfindungsgemäße Verfahren ermittelt die Navigationsroute mithin mehrstufig, wobei in einer ersten Stufe eine bloße Erreichbarkeitsprüfung auf Basis der Wegnetzdaten erfolgt, die aufgrund der reinen Abbildung von Verknüpfungen zwischen Wegsegmenten nur eine geringe Speicher- bzw. Übertragungskapazität in Anspruch nehmen. In einer zweiten Stufe werden nur für die relevanten, also zu einem Wegsegmentzug gehörenden, Wegsegmente die wesentlich detaillierteren Wegsegmentinformationen übertragen und verarbeitet. Somit wird eine äußerst aufwändige Übertragung von Wegsegmentinformationen für das gesamte Wegnetz vermieden und durch das erfindungsgemäße Verfahren der Betrieb des Navigationssystems mit einem wesentlich geringeren Datenübertragungsaufwand ermöglicht, als dies bei herkömmlichen Verfahren der Fall ist.

Es kann bei dem erfindungsgemäßen Verfahren insbesondere vorgesehen sein, dass die Navigationseinrichtung die Recheneinrichtung zum Übermitteln der Wegnetzdaten und/der Wegsegmentinformationen auffordert und wenigstens eine Eigenschaft des Fahrzeugs beschreibende Fahrzeuginformationen an die Recheneinrichtung übermittelt, wonach die Recheneinrichtung in Abhängigkeit der Fahrzeuginformation gefilterte Wegnetzdaten und/oder Wegsegmentinformationen an die Navigationseinrichtung übermittelt. Um den Datenübertragungsaufwand weiter zu reduzieren, wird mithin vorgeschlagen, recheneinrichtungsseitig eine Vorfilterung der zu übertragenden Wegnetzdaten und/oder Wegsegmentinformationen vorzunehmen. Beispielsweise kann die Fahrzeuginformation eine Fahrzeugklasse, z.B. Personenkraftwagen, Lastkraftwagen, Wohnmobil, Fahrzeug mit Anhänger, und/oder die Außenabmessungen des Fahrzeugs beschreiben. Die Recheneinrichtung kann die zu übertragenden Wegnetzdaten und/oder Wegsegmentinformationen dann bereits hinsichtlich jener Wegsegmente filtern, die auf Basis der Fahrzeuginformation als unpassierbar zu erachten sind. Eine endgültige bzw. exakte Überprüfung der Passierbarkeit erfolgt bevorzugt jedoch navigationseinrichtungsseitig auf Basis der übermittelten Wegsegmentinformationen.

Bei dem erfindungsgemäßen Verfahren werden zweckmäßigerweise Wegnetzdaten verwendet, welche das Wegnetz als Graph beschreiben, wobei Kanten des Graphen Wegsegmente repräsentieren und/oder ein Knoten des Graphen die Startposition und/oder ein Knoten des Graphen die Zielposition repräsentiert. Als Graph ist dabei eine Datenstruktur aufzufassen, die eine Menge von Objekten (Knoten) zusammen mit den zwischen diesen Objekten bestehenden Verbindungen (Kanten) repräsentiert und beispielsweise durch eine Adjazenzmatrix oder eine Adjazenzliste beschreibbar ist. Insbesondere wird der Wegsegmentzug durch eine Liste von Kanten und/oder Knoten beschreibenden Indizes repräsentiert. Die Repräsentation des Wegnetzes als Graph ermöglicht dabei eine besonders kompakte und datensparsame Beschreibung des Wegnetzes, für die zudem eine Vielzahl performanter Suchalgorithmen grundsätzlich bekannt sind, wie beispielsweise der A*-Algorithmus. Beim Anfordern der Wegsegmentinformationen kann die Navigationseinrichtung die Wegsegmente insbesondere durch Verwendung eines eine Kante und/oder wenigstens einen Knoten beschreibenden Index adressieren.

Es ist bei dem erfindungsgemäßen Verfahren vorgesehen, dass Wegsegmentinformationen verwendet werden, die eine geometrische Form des Wegsegments und/oder eine Referenztrajektorie für ein Fahrzeug entlang des Wegsegments beschreiben und/oder Informationen über Lokalisierungsmerkmale innerhalb der Navigationsumgebung umfassen. Außerdem wird es bei dem erfindungsgemäßen Verfahren bevorzugt, dass Wegsegmentinformationen verwendet werden, die Restriktionen für eine Bewegung eines Fahrzeugs entlang des Wegsegments beschreiben. Die geometrische Form des Wegsegments kann insbesondere dessen zwei- oder dreidimensionale Abmessung betreffen, wobei auch Hindernisse im Bereich des Wegsegments abgebildet werden können. Insbesondere kann ein Polygonzug zur Beschreibung der Abmessungen verwendet werden. Die Restriktionen können insbesondere nicht befahrbare oder nicht zum Befahren zugelassene Bereiche und/oder Verkehrsregeln beschreiben. Als Referenztrajektorie entlang des Wegsegmentzugs kann insbesondere eine Trajektorie vorgegeben sein, die bevorzugt durch das Fahrzeug beim Bewegen entlang des Wegsegments zu nutzen ist. Insbesondere kann die Referenztrajektorie als Teil der Navigationsroute ausgewählt werden. Lokalisierungsmerkmale können beispielsweise durch eine Sensorik des Fahrzeugs erfassbare künstliche oder natürliche Marker sein. Insbesondere können die Wegsegmentinformationen als Metadaten zur Navigationsroute verwendet werden.

Es wird bei dem erfindungsgemäßen Verfahren zudem bevorzugt, wenn die Navigationseinrichtung beim Überprüfen der Passierbarkeit der Wegsementzüge und/oder beim Ermitteln der Navigationsroute zusätzlich, insbesondere die Abmessungen des Fahrzeugs und/oder Bewegungsmöglichkeiten des Fahrzeugs beschreibende, Eigeninformationen berücksichtigt. Auf diese Weise lässt sich eine kollisionsfreie bzw. eine Kollisionen vermeidende Navigationsroute ermitteln. Die Eigeninformationen können auch identisch mit den Fahrzeuginformationen sein.

Bei dem erfindungsgemäßen Verfahren ist es darüber hinaus besonders zweckmäßig, wenn die Navigationseinrichtung die Recheneinrichtung mehrfach zum Übermitteln der Wegsegmentinformationen auffordert. Es kann vorgesehen sein, dass die Navigationseinrichtung die Recheneinrichtung zum Übermitteln von Wegsegmentinformationen für ein jeweils als nächstes zu überprüfendes Wegsegment auffordert. Alternativ oder zusätzlich kann die Recheneinrichtung mehrfach zum Übermitteln jeweils unterschiedlicher Wegsegmentinformationen für ein Wegsegment aufgefordert werden. Es können also je nach Bedarf sequenziell detailliertere Wegsegmentinformationen angefordert werden. Dabei kann ein Abbruchkriterium vorgesehen sein, beispielsweise wenn ein Wegsegment eines Wegsegmentzugs als nicht passierbar bewertet wird oder eine Begrenzung für den Überprüfungsaufwand eines Wegsegments erreicht ist.

Es ist bei dem erfindungsgemäßen Verfahren vorgesehen, dass ein Wegnetz einer wenigstens eine Serviceeinrichtung umfassenden Servicestation beschreibende Wegnetzdaten verwendet werden. Eine Servicestation kann beispielsweise eine Waschanlage mit wenigstens einem Waschplatz und/oder wenigstens einer Waschstraße als Serviceeinrichtung, eine Werkstatt mit wenigstens einem Werkstattpatz als Serviceeinrichtung, eine Haltestelle für Busse und/oder Taxen mit wenigstens einer induktiven Ladevorrichtung für Elektrofahrzeuge als Serviceeinrichtung, eine Mautstation mit wenigstens einer Bezahlstelle als Serviceeinrichtung, eine Fährstation, ein Restaurant mit wenigstens einem Drive-In-Schalter als Serviceeinrichtung, eine Fahrzeug- oder Warenprüfstation mit wenigstens einer Waage und/oder wenigstens einem Durchleuchtungsgerät und/oder wenigstens einem Prüfplatz als Serviceeinrichtung oder eine Sehenswürdigkeit sein. Wie bereits zuvor erwähnt muss das Fahrzeug an der Serviceeinrichtung nicht zum Stehen kommen, was insbesondere bei einer Waschstraße, einer induktiven Ladevorrichtung oder einem Durchleuchtungsgerät der Fall ist. Zusätzlich kann die Navigationseinrichtung beim Auffordern der Recheneinrichtung zum Übertragen der Wegnetzdaten wenigstens eine durch einen Insassen des Fahrzeugs gewünschte anzufahrende Serviceeinrichtung und/oder einen von einem Insassen gewünschten Dienst, den eine Serviceeinrichtung der Servicestation bereitstellt, beschreibende Insasseninformation an die Recheneinrichtung übertragen, wobei die Recheneinrichtung die zu übertragenden Wegnetzdaten in Abhängigkeit der Insasseninformation auswählt. Bevorzugt wird zusätzlich von der Recheneinrichtung eine die Belegung einzelner Serviceeinrichtungen beschreibende Belegungsinformation an die Navigationseinrichtung übertragen, wobei die Belegungsinformationen bei der Ermittlung und/oder der Überprüfung des Wegsementzugs berücksichtigt werden kann.

Als Zielposition kann die Position einer Serviceeinrichtung verwendet werden oder die Navigationseinrichtung kann den Wegsegmentzug derart wählen, dass das Fahrzeug entlang einer Serviceeinrichtung und/oder durch eine Serviceeinrichtung geführt wird. Letzteres bietet sich insbesondere bei der Waschanlage als Servicestation oder beim Überfahren der induktiven Ladeeinrichtung an oder beim Durchfahren des Durchleuchtungsgeräts an. Ein Wegsegment kann entlang oder durch eine Servicestation führen.

Alternativ oder zusätzlich können zum Ermitteln zumindest eines Teils der Navigationsroute, welcher das Erreichen der Serviceeinrichtung betrifft, die Serviceeinrichtung beschreibende Serviceeinrichtungsinformationen nach Aufforderung durch die Navigationseinrichtung von der Recheneinrichtung übermittelt werden. Die exakte Ermittlung der Navigationsroute zum Erreichen der Serviceeinrichtungen kann unter Umständen aufgrund besonderer geometrischer oder fahrzeugkinematischer Eigenschaften spezialisierte Algorithmen erfordern, weshalb dafür ein weiterer Detaillierungsstufe der Datenbasis vorgesehen sein kann. Beispielsweise kann eine fahrzeugspezifische Trajektorie für das Erreichen der Serviceeinrichtung unter Berücksichtigung besonderer geometrischer Gegebenheiten im Bereich der Serviceeinrichtungen, insbesondere der Lage von Lade- bzw. Entladerampen, einer Hebebühne oder von Prüf- oder Kalibrierständen, des Fahrzeugtyps, besonderer Präferenzen eines Insassens oder besonderer Lade- bzw. Entladekriterien ermittelt werden. Alternativ oder zusätzlich ist denkbar, dass eine einzügige oder mehrzügige Bahn zum kollisionsfreien bzw. eine Kollision vermeidendes Erreichen von einer Position auf einem Wegsegment zu der Serviceeinrichtung ermittelt wird.

Es kann bei dem erfindungsgemäßen Verfahren des Weiteren vorgesehen sein, dass die Navigationseinrichtung mehrere mögliche Navigationsrouten ermittelt und, insbesondere gemäß einer Kostenfunktion, bewertet. Die Kostenfunktion weist einer Navigationsroute dabei einen Aufwandswert für eine Bewegung des Fahrzeugs zu und kann ihre Strecke, eine Bewegungsdauer des Fahrzeugs, einen Kraftstoffverbrauch und Rangiermanöver zum Erreichen der Endposition berücksichtigen bzw. gewichten. Die möglichen Navigationsrouten können mithin gemäß der Bewertung geordnet bzw. sortiert werden.

Darüber hinaus wird es bei dem erfindungsgemäßen Verfahren bevorzugt, wenn die Navigationsroute, insbesondere die am besten bewertete Navigationsroute oder eine von einem Insassen des Fahrzeugs ausgewählte Navigationsroute, beschreibende Navigationsroutendaten einer Bahnfolgeregelungseinrichtung und/oder einer Trajektorienplanungseinrichtung des Fahrzeugs bereitgestellt werden. Die Navigationseinrichtung kann mithin aus der Navigationsroute oder bei mehreren möglichen ermittelten Navigationsrouten aus der am besten bewerteten Navigationsroute Navigationsroutendaten erzeugen, welche sie bevorzugt zumindest mit Teilen der Wegsegmentinformationen als Metadaten ergänzt.

Schließlich kann bei dem erfindungsgemäßen Verfahren als Fahrzeug ein Kraftfahrzeug oder Luftfahrzeug oder ein fahrerloses Transportmittel verwendet werden. Das Fahrzeug kann autonom oder teilautonom betrieben sein. Insbesondere bei einem Kraftfahrzeug kann die Navigationsroute für ein den Fahrer unterstützendes Assistenzsystem, welches Navigationshinweise für das Lenken des Kraftfahrzeugs erzeugt, verwendet werden.

Daneben betrifft die Erfindung gemäß Patentanspruch 11 ein Fahrzeug mit einer Navigationseinrichtung, wobei das Fahrzeug zur Durchführung des erfindungsgemäßen Verfahrens ausgebildet ist.

Außerdem betrifft die Erfindung gemäß Patentanspruch 12 eine Recheneinrichtung, welche zum Durchführen des erfindungsgemäßen Verfahrens ausgebildet ist.

Sämtliche Ausführungen zum erfindungsgemäßen Verfahren lassen sich analog auf das erfindungsgemäße Fahrzeug und die erfindungsgemäße Recheneinrichtung übertragen, so dass auch mit diesen die zuvor genannten Vorteile erzielbar sind.

Weitere Vorteile und Einzelheiten der Erfindung ergeben sich aus den im Folgenden beschriebenen Ausführungsbeispielen sowie anhand der Zeichnungen. Diese sind schematische Darstellungen und zeigen:
- Fig. 1: eine Prinzipskizze eines Ausführungsbeispiels eines Navigationssystem, umfassend ein erfindungsgemäßes Fahrzeug und eine erfindungsgemäße Recheneinrichtung; und
- Fig. 2: eine Prinzipskizze einer exemplarische Fahrsituation des in Fig. 1 gezeigten Fahrzeugs.

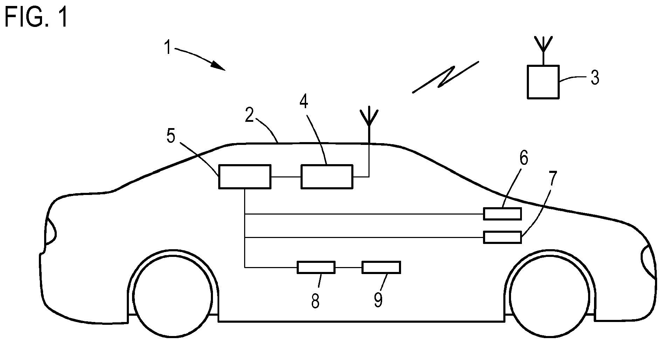

Fig. 1 ist eine Prinzipskizze eines Ausführungsbeispiels eines Navigationssystems 1, umfassend ein Fahrzeug 2 und eine Recheneinrichtung 3.

Das Fahrzeug 2 ist vorliegend als autonom betriebenes Kraftfahrzeug ausgebildet, wobei in weiteren Ausführungsbeispielen das Fahrzeug 2 zum teilautonomen oder lediglich assistierten Betrieb ausgebildet oder ein fahrerloses Transportsystem oder ein Fluggerät ist. Das Fahrzeug 2 weist eine Kommunikationseinrichtung 4 zur drahtlosen Datenkommunikation mit der Recheneinrichtung 3 und eine mit der Kommunikationseinrichtung 4 verbundene Navigationseinrichtung 5 auf. Mit dieser sind eine optische und akustische Ausgabeeinheit 6 und eine Eingabeeinheit 7 zur Entgegennahme von manuellen Bedieneingaben und/oder Sprachbedieneingaben eines Insassen des Fahrzeugs 2 verbunden. Außerdem sind eine Trajektorienplanungseinrichtung 8 und eine dieser nachgeordnete Bahnfolgeregelungeinrichtung 9 vorgesehen, welche Navigationsroutendaten der Navigationseinrichtung 5 zur automatisierten Quer- und Längsführung des Fahrzeugs 2 verwenden. Bei einem lediglich teilautonom betriebenen Fahrzeug 2 wird auf die Trajektorienplanungseinrichtung 8 verzichtet. Bei einem dem Fahrer assistierenden Fahrzeug 2 werden aus den Navigationsroutendaten Navigationshinweise, die mittels der Ausgabeeinheit 6 ausgebbar sind, erzeugt.

Über die Kommunikationseinrichtung 4 ist das Fahrzeug 2 drahtlos mit der Recheneinrichtung 3 verbunden, welche einen oder mehrere Backendserver umfasst.

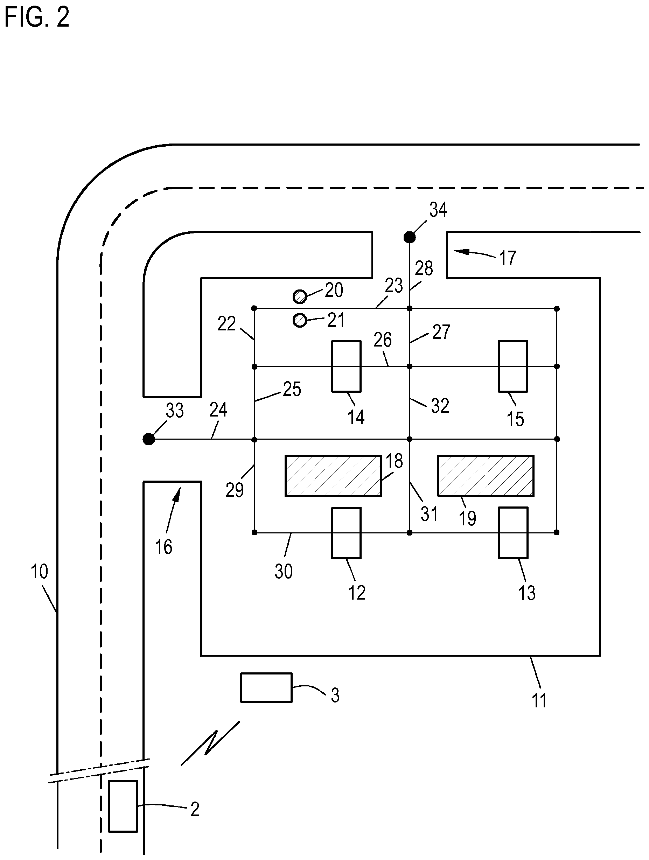

Fig. 2 ist eine Prinzipskizze einer exemplarischen Fahrsituation des Fahrzeugs 2, welches sich auf einer öffentlichen Straße 10 einer Servicestation 11 mit vier Serviceeinrichtungen 12-15 nähert. Die Servicestation weist eine Zufahrt 16 und eine Ausfahrt 17 sowie mehrere nicht zu befahrende Bereiche 18-21 auf. Es ergibt sich mithin ein Wegnetz aus einzelnen Wegsegmenten, von denen lediglich die Wegsegmente 22-32 mit Bezugszeichen versehen sind, innerhalb der Servicestation 11, wobei das Wegnetz durch Wegnetzdaten, die in der Recheneinrichtung 3 abgelegt sind, beschrieben wird. Das Fahrzeug 2 und die Recheneinrichtung 3 sind zum Durchführen eines Verfahrens zum Betreiben des Navigationssystems 1 ausgebildet, dessen Ablauf anhand der Fahrsituation im Folgenden näher erläutert wird:
Aufgrund einer Bedieneingabe des Insassen des Fahrzeugs 2 oder einer automatisierten Routen- oder Flottenplanung, die das Anfahren der Servicestation 11 vorsieht, übermittelt die Navigationseinrichtung 5 über die Kommunikationseinrichtung 4 eine Aufforderung an die Recheneinrichtung 3 zur Übermittlung von Wegnetzdaten. Diese Aufforderung umfasst eine Eigenschaft des Fahrzeugs 2 beschreibende Fahrzeuginformationen über seine Fahrzeugklasse und seine Außenabmessungen.

Die Recheneinrichtung 3 übermittelt auf diese Aufforderung die Wegnetzdaten, welche das Wegnetz als Graph beschreiben, an die Navigationseinrichtung 5, wobei Kanten des Graphen Wegsegmente repräsentieren und Knoten des Graphen Verbindungen zwischen diesen Wegsegmenten. Einer der Knoten des Graphen entspricht dabei einer Startposition 33 an der Einfahrt 16 und einer der Knoten einer Zielposition 34 an der Einfahrt 17 der Servicestation 11. Dabei filtert die Recheneinrichtung 3 die zu übertragenden Wegnetzdaten in Abhängigkeit der Fahrzeuginformationen wobei die Wegsegmente 21, 22 nicht übertragen werden, da die Recheneinrichtung 3 aufgrund der Außenabmessungen und des Fahrzeugtyps des Fahrzeugs 2 bereits im Vorfeld eine Nichtpassierbarkeit des Wegsegments 22 aufgrund der nicht zu befahrenen Bereiche 20, 21 feststellt.

Die Navigationseinrichtung 5 überprüft die Wegsegmentdaten auf mögliche Wegsegmentzüge, über die die Serviceeinrichtungen 12-14 grundsätzlich erreichbar sind. Dazu führt die Navigationseinrichtung 5 eine Graphensuche, beispielsweise mithilfe des A*-Algorithmus, auf den übermittelten Wegnetzdaten durch, wobei sie mehrere Wegsegmentzüge ermittelt, welche grundsätzlich benötigt werden, um das Fahrzeug 2 von der Startposition 33 durch eine der Serviceeinrichtungen 12-15 zur Zielposition 34 zu navigieren. Vorliegend umfasst ein ermittelter Wegsegmentzug die Wegsegmente 24-28 und ein weiterer Wegsegmentzug die Wegsegmente 24, 29-32, 27, 28. Weitere ermittelte Wegsegmentzüge welche aus Gründen der Übersichtlichkeit hier nicht einzeln aufgeführt. Die so ermittelten Wegsegmentzüge sind die Grundlage für die Ermittlung mehrerer möglicher Navigationsrouten von der Startposition 33 zur Zielposition 34. Als Ergebnis liegen sortierte Listen von Wegsegmenten 24-32 für jeden Wegsegmentzug vor.

Anschließend fordert die Navigationsseinrichtung 5 die Recheneinrichtung 3 sequenziell zur Übermittlung von die Wegsegmente 24-32 der ermittelten Wegsegmentzüge beschreibenden Wegsegmentinformationen auf. Diese Wegsegmentinformationen beschreiben die geometrische Form der Wegsegmente 24-32, Restriktionen für eine Bewegung des Fahrzeugs 2, wie besondere Verkehrsregeln, eine Referenztrajektorie für das Fahrzeug 2 entlang eines Wegsegments 22-28 und umfassen Informationen über Lokalisierungsmerkmale innerhalb der Servicestation 11, welche durch eine Sensorik des Fahrzeugs 2 erfassbar sind. Die einzelnen Wegsegmente werden durch die Wegsegmentinformationen mithin wesentlich detaillierter beschrieben als durch die Wegnetzdaten. Die Recheneinrichtung 3 filtert daraufhin analog zu den Wegsegmentdaten die zu übermittelnden Wegsegmentinformationen unter Berücksichtigung der Fahrzeuginformationen derart, dass nur für den Fahrzeugtyp und die Außenabmessungen des Fahrzeugs 2 relevante Wegsegmentinformationen übertragen werden. Die Recheneinrichtung 3 übermittelt ferner eine eine Belegung der Serviceeinrichtungen 12-15 beschreibende Belegungsinformation, aus der sich Zeiträume für eine Belegung der Serviceeinrichtungen 12-15 ergeben. Ebenso werden Informationen über nur zeitlich bestehende Hindernisse für das Fahrzeug 2 in der Servicestation 11 an die Navigationseinrichtung 5 übertragen.

Die Navigationseinrichtung 5 überprüft sodann die Wegsegmentzüge auf ihre Passierbarkeit für das Fahrzeug 2 unter Berücksichtigung der Wegsegmentinformationen, der Belegungsinformation und der weiteren Informationen über zeitlich bestehende Hindernisse, derart, dass Kollisionen des Fahrzeugs 2 innerhalb des Servicestation 11 vermieden werden. Dazu wertet die Navigationseinrichtung 5 die die geometrische Form eines jeweiligen Wegsegments 24-32 beschreibenden Wegsegmentinformationen aus, welche einen verfügbaren Bewegungsraum als dreidimensionalen Polygonzug beschreiben, wobei die Navigationseinrichtung 5 zusätzlich Eigeninformationen über die Abmessungen des Fahrzeugs 2 und seine Bewegungsmöglichkeiten berücksichtigt.

Bei der Überprüfung der Passierbarkeit fordert die Navigationseinrichtung 5 die Recheneinrichtung 3 sequenziell für jedes als nächstes auf seine Passierbarkeit zu überprüfende Wegsegment 24-32 zur Übermittlung der Wegsegmentinformationen auf. Erfordert die Überprüfung der Passierbarkeit detailliertere Wegsegmentinformationen als jene, die bereits übermittelt wurden, so fordert die Navigationseinrichtung 5 die Recheneinrichtung 3 erneut, gegebenenfalls mehrfach zu Übermittlung von unterschiedlichen Wegsegmentinformationen für ein jeweiliges Wegsegment 24-32 auf. Dabei ist ein Abbruchkriterium vorgesehen, welches den zeitlichen Aufwand für die Überprüfung der Passierbarkeit auswertet und die Anforderung weiterer Wegsegmentinformationen gegebenenfalls beendet. Es ergeben sich daraus als passierbar überprüfte Wegsegmentzüge, also mögliche Navigationsrouten.

Daran anschließend fordert die Navigationseinrichtung 5 die Recheneinrichtung 3 zur Ermittlung von Serviceeinrichtungsinformationen auf. Diese beschreiben detaillierte geometrische Gegebenheiten und Hindernisse einer jeweiligen Serviceeinrichtung 12-15. Die Serviceeinrichtungsinformationen sind mithin nochmals detaillierter als die Wegsegmentinformationen. Handelt es sich bei den Serviceeinrichtungen 12-15 beispielsweise um Werkstattplätze oder eine Beladeeinrichtung, so beschreiben die Serviceeinrichtungsinformationen präzise die Lage einer Hebebühne oder von Prüf- und Kalibrierständen bzw. einer Lade- oder Entladerampe. Die Navigationseinrichtung 5 ermittelt dann für einen das Erreichen der Serviceeinrichtung 12-15 betreffenden Teil einer jeweiligen möglichen Navigationsroute unter Berücksichtigung der Serviceeinrichtungsinformationen eine exakte, gegebenenfalls mehrzügige Trajektorie.

Die jeweiligen möglichen Navigationsrouten bewertet die Navigationseinrichtung 5 gemäß einer Kostenfunktion, die den Aufwand beim Bewegen des Fahrzeugs 2 entlang des Wegsegmentzugs beschreibt, und sortiert die Wegsementzüge anhand ihrer Bewertung. Die bestbewertete Navigationsroute ergänzt die Navigationseinrichtung 5 um die Wegsegmentinformationen, welche die Lokalisierungsmerkmale, die Restriktionen und die Referenztrajektorie beschreiben, zu den Navigationsroutendaten, welche sie an die Trajektorienplanungseinrichtung 8 übermittelt. In einem alternativen Ausführungsbeispiel werden die bewerteten und sortierten möglichen Navigationsroutendaten einem Insassen des Fahrzeugs 2 auf der Ausgabeeinheit 6 angezeigt. Eine über die Bedieneinheit 7 vom Insassen ausgewählte Navigationsroute wird dann mit den Wegsegmentinformationen ergänzt. Die so gebildeten Navigationsroutendaten werden dann an die Trajektorienplanungseinrichtung 8 übermittelt.

Sobald das Fahrzeug 2 die Startposition 33 über die Straße 10 erreicht hat, kann das Fahrzeug 2 mittels der Bahnfolgeregelungeinrichtung 9 entlang der ausgewählten Navigationsrouten durch die Servicestation 11 geführt werden.

Gemäß weiteren Ausführungsbeispielen ist die Servicestation 11 eine Waschanlage mit wenigstens einem Waschplatz oder wenigstens einer Waschstraße als Serviceeinrichtung 12-15 oder eine Werkstatt mit wenigstens einem Werkstattpatz als Serviceeinrichtung 12-15 oder eine Haltestelle für Busse und/oder Taxen mit wenigstens einer induktiven Ladevorrichtung für Elektrofahrzeuge als Serviceeinrichtung 12-15 oder eine Mautstation mit wenigstens einer Bezahlstelle als Serviceeinrichtung 12-15 oder eine Fährstation oder ein Restaurant mit wenigstens einem Drive-In-Schalter als Serviceeinrichtung 12-15 oder eine Fahrzeug- oder Warenprüfstation mit wenigstens einer Waage, wenigstens einem Durchleuchtungsgerät oder wenigstens einem Prüfplatz als Serviceeinrichtung 12-15 oder eine Sehenswürdigkeit.

## Patentansprüche

1. Verfahren zum Betreiben eines ein Fahrzeug (2) und eine fahrzeugexterne Recheneinrichtung (3) umfassenden Navigationssystems (1), wobei
- eine fahrzeugseitige Navigationseinrichtung (5) aus von der Recheneinrichtung (3) übermittelten, Wegsegmente (24 - 32) eines Wegnetzes und deren Verknüpfungen beschreibenden Wegnetzdaten, welche Wegnetzdaten wenigstens eine eine Serviceeinrichtung (12 - 15) umfassende Servicestation (11) beschreiben, einen wenigstens ein Wegsegment (24 - 32) umfassenden Wegsegmentzug ermittelt, welcher zum Erreichen einer Zielposition (34) von einer Startposition (33) aus benötigt wird,
- wonach die Navigationseinrichtung (5) die Recheneinrichtung (3) auffordert, für wenigstens ein Wegsegment (24 - 32) des Wegsegmentzugs zu dem wenigstens einen Wegsegment (24 - 32)
des Wegsegmentzugs gehörende, auf die Passierbarkeit des Wegsegments (24 - 32) bezogene Wegsegmentinformationen, welche Wegsegmentinformationen eine geometrische Form des Wegsegments (24 - 32) und/oder eine Referenztrajektorie für das Fahrzeug (2) entlang des Wegsegments (24 - 32) beschreiben und/oder Informationen über Lokalisierungsmerkmale für das Fahrzeug (2) umfassen, zu übertragen,
- wonach die Navigationseinrichtung (5) die Passierbarkeit des Wegsegmentzugs für das Fahrzeug (2) unter Berücksichtigung von den nach der Aufforderung der Navigationseinrichtung (5) durch die Recheneinrichtung (3) übermittelten Wegsegmentinformationen überprüft,
- wonach die Navigationseinrichtung (5) eine aus einem unter Berücksichtigung der Wegsegmentinformationen als passierbar überprüften Wegsegmentzug abgeleitete Navigationsroute ermittelt.

2. Verfahren nach Anspruch 1,
**dadurch gekennzeichnet,**
**dass** die Navigationseinrichtung (5) die Recheneinrichtung (3) zum Übermitteln der Wegnetzdaten und/oder der Wegsegmentinformationen auffordert und wenigstens eine Eigenschaft des Fahrzeugs (2) beschreibende Fahrzeuginformationen an die Recheneinrichtung übermittelt, wonach die Recheneinrichtung (3) in Abhängigkeit der Fahrzeuginformationen gefilterte Wegnetzdaten und/oder Wegsegmentinformationen an die Navigationseinrichtung (5) übermittelt.

3. Verfahren nach Anspruch 1 oder 2,
**dadurch gekennzeichnet,**
**dass** Wegnetzdaten verwendet werden, welche das Wegnetz als Graph beschreiben, wobei Kanten des Graphen Wegsegmente (24 - 32) repräsentieren und/oder ein Knoten des Graphen die Startposition (33) und/oder ein Knoten des Graphen die Zielposition (34) repräsentiert.

4. Verfahren nach einem der vorhergehenden Ansprüche,
**dadurch gekennzeichnet,**
**dass** die Navigationseinrichtung (5) beim Überprüfen der Passierbarkeit der Wegsementzüge und/oder beim Ermitteln der Navigationsroute zusätzlich, insbesondere die Abmessungen des Fahrzeugs (2) und/oder Bewegungsmöglichkeiten des Fahrzeugs (2) beschreibende, Eigeninformationen berücksichtigt.

5. Verfahren nach einem der vorhergehenden Ansprüche,
**dadurch gekennzeichnet,**
**dass** die Navigationseinrichtung (5) die Recheneinrichtung (3) mehrfach zum Übermitteln der Wegsegmentinformationen auffordert.

6. Verfahren nach einem der vorangehenden Ansprüche,
**dadurch gekennzeichnet,**
**dass** als Zielposition (34) die Position der Serviceeinrichtung (12 - 15)
verwendet wird oder dass die Navigationseinrichtung (5) den Wegseg- mentzug derart wählt, dass das Fahrzeug entlang der Serviceeinrich- tung (12 - 15) und/oder durch die Serviceeinrichtung (12 - 15) geführt
wird.

7. Verfahren nach einem der vorangehenden Ansprüche,
**dadurch gekennzeichnet,**
**dass** zum Ermitteln zumindest eines Teils der Navigationsroute, welcher das Erreichen der Serviceeinrichtung (12 - 15) betrifft, zusätzliche die Serviceeinrichtung (12 - 15) beschreibende Serviceeinrichtungsinformationen nach Aufforderung durch die Navigationseinrichtung (5) von der Recheneinrichtung (3) übermittelt werden.

8. Verfahren nach einem der vorhergehenden Ansprüche,
**dadurch gekennzeichnet,**
**dass** die Navigationseinrichtung (5) mehrere mögliche Navigationsrouten ermittelt und, insbesondere gemäß einer Kostenfunktion, bewertet.

9. Verfahren nach einem der vorhergehenden Ansprüche,
**dadurch gekennzeichnet,**
**dass** die Navigationsroute, insbesondere eine am besten bewertete Navigationsroute oder eine von einem Insassen des Fahrzeugs (2) ausgewählte Navigationsroute, beschreibende Navigationsroutendaten einer Bahnfolgeregelungseinrichtung (9) und/oder einer Trajektorienplanungseinrichtung (8) des Fahrzeugs (2) bereitgestellt werden.

10. Verfahren nach einem der vorhergehenden Ansprüche,
**dadurch gekennzeichnet,**
**dass** als Fahrzeug (2) ein Kraftfahrzeug oder ein fahrerloses Transportmittel oder ein Luftfahrzeug verwendet wird.

11. Fahrzeug umfassend eine Kommunikationseinrichtung (4) zur drahtlosen Datenkommunikation mit einer fahrzeugexternen Recheneinrichtung (3) und eine mit der Kommunikationseinrichtung (4) verbundene Navigationseinrichtung (5), wobei das Fahrzeug (2) zum Durchführen eines Verfahrens nach einem der vorhergehenden Ansprüche ausgebildet ist, wobei die Navigationseinrichtung (5) dazu ausgebildet ist, aus von der Recheneinrichtung (3) übermittelten, Wegsegmente (24 - 32) eines Wegnetzes und deren Verknüpfungen beschreibenden Wegnetzdaten, welche Wegnetzdaten wenigstens eine eine Serviceeinrichtung (12 - 15) umfassende Servicestation (11) beschreiben, einen wenigstens ein Wegsegment (24 - 32) umfassenden Wegsegmentzug zu ermitteln, welcher zum Erreichen einer Zielposition (34) von einer Startposition (33) aus benötigt wird, wonach die Navigationseinrichtung (5) die Recheneinrichtung (3) auffordert, für wenigstens ein Wegsegment (24 - 32) des Wegsegmentzugs zu dem wenigstens einen Wegsegment (24 - 32) des Wegsegmentzugs gehörende, auf die Passierbarkeit des Wegsegments (24 - 32) bezogene Wegsegmentinformationen, welche Wegsegmentinformationen eine geometrische Form des Wegsegments (24 - 32) und/oder eine Referenztrajektorie für das Fahrzeug (2) entlang des Wegsegments (24 - 32) beschreiben und/oder Informationen über Lokalisierungsmerkmale für das Fahrzeug (2) umfassen, zu übertragen und nach der Übertragung die Passierbarkeit des Wegsegmentzugs für das Fahrzeug (2) unter Berücksichtigung von den nach der Aufforderung der Navigationseinrichtung (5) durch die Recheneinrichtung (3) übermittelten Wegsegmentinformationen zu überprüfen und eine aus einem unter Berücksichtigung der Wegsegmentinformationen als passierbar überprüften Wegsegmentzug abgeleitete Navigationsroute zu ermitteln.

12. Recheneinrichtung, welche zum Durchführen eines Verfahrens nach einem der Ansprüche 1 bis 10 ausgebildet ist, wobei die Recheneinrichtung (3) dazu ausgebildet ist, Wegsegmente (24 - 32) eines Wegnetzes und deren Verknüpfungen beschreibende Wegnetzdaten, welche Wegnetzdaten wenigstens eine eine Serviceeinrichtung (12 - 15) umfassende Servicestation (11) beschreiben, an eine Navigationseinrichtung (5) eines Fahrzeugs (2) zu übermitteln und nach Aufforderung durch die Navigationseinrichtung (5) für wenigstens ein Wegsegment (24 -32) des Wegsegmentzugs zu dem wenigstens einen Wegsegment (24 - 32) des Wegsegmentzugs gehörende, auf die Passierbarkeit des Wegsegments (24 - 32) bezogene Wegsegmentinformationen, welche Wegsegmentinformationen eine geometrische Form des Wegsegments (24 - 32) und/oder eine Referenztrajektorie für das Fahrzeug (2) entlang des Wegsegments (24 - 32) beschreiben und/oder Informationen über Lokalisierungsmerkmale für das Fahrzeug (2) umfassen, an die Navigationseinrichtung (5) zu übertragen.

## Claims

1. Method for operating a navigation system (1) comprising a vehicle (2) and a computing device (3) outside the vehicle, wherein
- a navigation device (5) in the vehicle determines from route network data, transmitted by the computing device (3), describing route segments (24 - 32) of a route network and their interconnections, which route network data describe at least one service station (11) including a service facility (12 -15), a route segment chain, comprising at least one route segment (24 - 32), which is required to reach a target position (34) from a start position (33),
- according to which the navigation device (5) requests the computing device (3), for at least one route segment (24 - 32) of the route segment chain, to transmit route segment information belonging to the at least one route segment (24 - 32) of the route segment chain, related to the passability of the route segment (24 - 32), which route segment information describes a geometrical shape of the route segment (24 - 32) and/or a reference trajectory for the vehicle (2) along the route segment (24 - 32) and/or comprise information regarding localisation characteristics for the vehicle (2),
- after which the navigation device (5) verifies the passability of the route segment chain for the vehicle (2) taking into consideration the route segment information transmitted by the computing device (3) after the request of the navigation device (5),
- after which the navigation device (5) determines a navigation road derived from a route segment chain which has been verified as passable taking into consideration the route segment information.

2. Method according to claim 1,
**characterised in**
**that** the navigation device (5) requests the computing device (3) to transmit the route network data and/or the route segment information and transmits to the computing device vehicle information describing at least one property of the vehicle (2), after which the computing device (3) transmits route network data, filtered as a function of the vehicle information, and/or route segment information to the navigation device (5).

3. Method according to claim 1 or 2,
**characterised in**
**that** route network data are used which describe the route network as a graph, wherein edges of the graph represent route segments (24 - 32) and/or a node of the graph represents the start position (33) and/or a node of the graph represents the target position (34).

4. Method according to any of the preceding claims,
**characterised in**
**that** the navigation device (5) takes into consideration additionally its own information describing in particular the dimensions of the vehicle (2) and/or movement possibilities of the vehicle (2) when verifying the passability of the route segment chains and/or when determining the navigation route.

5. Method according to any of the preceding claims,
**characterised in**
**that** the navigation device (5) makes multiple requests of the computing device (3) to transmit the route segment information.

6. Method according to any of the preceding claims,
**characterised in**
**that** as a target position (34) is used the position of the service facility (12 - 15) or that the navigation device (5) selects the route segment chain such that the vehicle is guided alongside the service facility (12 -15) and/or through the service facility (12 -15).

7. Method according to any of the preceding claims,
**characterised in**
**that** for determining at least a part of the navigation road, which part concerns the reaching of the service facility (12 - 15), additional service facility information describing the service facility (12 - 15) are transmitted after being requested from the computing device (3) by the navigation device (5).

8. Method according to any of the preceding claims,
**characterised in**
**that** the navigation device (5) determines a plurality of possible navigation roads and evaluates them, in particular according to a cost function.

9. Method according to any of the preceding claims,
**characterised in**
**that** navigation road data describing the navigation road, in particular a navigation road which has been evaluated as the best or a navigation road selected by an occupant of the vehicle (2), are provided to a course tracking device (9) and/or a trajectory planning device (8) of the vehicle (2).

10. Method according to any of the preceding claims,
**characterised in**
**that** as a vehicle (2) is used a motor vehicle or a driverless transport means or an aircraft.

11. Vehicle comprising a communication device (4), for the wireless data communication with a computing device (3) outside the vehicle, and a navigation device (5) connected with the communication device (4), wherein the vehicle (2) is configured to carry out a method according to any of the previous claims, wherein the navigation device (5) is configured to determine from route network data transmitted by the computing device (3), describing route segments (24 - 32) of a route network and their interconnections, which route network data describe at least one service station (11) including a service facility (12 - 15), a route segment chain comprising at least one route segment (24 - 32), which is required to reach a target position (34) from a start position (33), after which the navigation device (5) requests the computing device (3), for at least one route segment (24 - 32) of the route segment chain, to transmit route segment information belonging to the at least one route segment (24 - 32) of the route segment chain, related to the passability of the route segment (24 - 32), which route segment information describe a geometrical shape of the route segment (24 - 32) and/or a reference trajectory for the vehicle (2) along the route segment (24 - 32) and/or comprise information regarding localisation characteristics for the vehicle (2), and after the transmission to verify the passability of the route segment chain for the vehicle (2) taking into consideration the route segment information transmitted by the computing device (3) after the request of the navigation device (5) and to determine a navigation road derived from a route segment chain which has been verified as possible taking into consideration the route segment information.

12. Computing device which is configured to carry out a method according to any of claims 1 to 10, wherein the computing device (3) is configured to transmit route network data describing route segments (24 - 32) of a route network and their interconnections, which route network data describe at least one service station (11) including a service facility (12 - 15), to a navigation device (5) of a vehicle (2) and after a request on the part of the navigation device (5) for at least one route segment (24 - 32) of the route segment chain to transmit route segment information belonging to the at least one route segment (24 - 32) of the route segment chain, relating to the passability of the route segment (24 - 32), which segment information describes a geometrical shape of the route segment (24 - 32) and/or a reference trajectory for the vehicle (2) along the route segment (24 - 32) and/or comprise information regarding localisation characteristics of the vehicle (2), to the navigation device (5).

## Revendications

1. Procédé de fonctionnement d'un système de navigation (1) comprenant un véhicule (2) et un dispositif de calcul (3) externe au véhicule, dans lequel
- un dispositif de navigation (5) côté véhicule détermine, à partir de données de réseau routier transmises par le dispositif de calcul (3) et décrivant des segments routiers (24 - 32) d'un réseau routier et leurs liaisons, lesquelles données de réseau routier décrivent au moins une station de service (11) comprenant un dispositif de service (12 - 15), un train de segments routiers comprenant au moins un segment routier (24 - 32), lequel train de segments routiers est nécessaire pour atteindre une position cible (34) à partir d'une position de départ (33),
- après quoi le dispositif de navigation (5) demande au dispositif de calcul (3), pour au moins un segment routier (24 - 32) du train de segments routiers appartenant à l'au moins un segment routier (24 - 32) du train de segments routiers, de transmettre des informations de segment routier appartenant à l'au moins un segment routier (24 - 32) du train de segments routiers et relatives à la praticabilité du segment routier (24 - 32), lesquelles informations de segment routier décrivent une forme géométrique du segment routier (24 - 32) et/ou une trajectoire de référence pour le véhicule (2) le long du segment routier (24 - 32) et/ou comprennent des informations sur des caractéristiques de localisation pour le véhicule (2),
- après quoi le dispositif de navigation (5) vérifie la praticabilité du train de segments routiers pour le véhicule (2) en tenant compte des informations de segment routier transmises après la sollicitation du dispositif de navigation (5) par le dispositif de calcul (3),
- après quoi le dispositif de navigation (5) détermine un itinéraire de navigation dérivé d'un train de segments routiers qui a été vérifié comme praticable en tenant compte des informations de segment routier.

2. Procédé selon la revendication 1,
**caractérisé en ce**
**que** le dispositif de navigation (5) demande au dispositif de calcul (3) de transmettre les données de réseau routier et/ou les informations de segment routier et transmet des informations de véhicule décrivant au moins une caractéristique du véhicule (2) au dispositif de calcul, après quoi le dispositif de calcul (3) transmet des données de réseau routier filtrées et/ou des informations de segment routier au dispositif de navigation (5) en fonction des informations de véhicule.

3. Procédé selon la revendication 1 ou 2,
**caractérisé en ce**
**que** des données de réseau routier sont utilisées, lesquelles décrivent le réseau routier en tant que graphique, dans lequel les bords du graphique représentent des segments routiers (24 - 32) et/ou un nœud du graphique représente la position de départ (33) et/ou un nœud du graphique représente la position cible (34).

4. Procédé selon l'une quelconque des revendications précédentes,
**caractérisé en ce**
**que** le dispositif de navigation (5), lors du contrôle de la praticabilité des trains de segments routiers et/ou lors de la détermination de l'itinéraire de navigation, prend également en compte des informations propres décrivant en particulier les dimensions du véhicule (2) et/ou les possibilités de déplacement du véhicule (2).

5. Procédé selon l'une quelconque des revendications précédentes,
**caractérisé en ce**
**que** le dispositif de navigation (5) demande plusieurs fois au dispositif de calcul (3) de transmettre les informations de segment routier.

6. Procédé selon l'une quelconque des revendications précédentes,
**caractérisé en ce**
**que** la position du dispositif de service (12 - 15) est utilisée comme position cible (34), ou **en ce que** le dispositif de navigation (5) sélectionne le train de segments routiers de sorte que le véhicule est guidé le long du dispositif de service (12 - 15) et/ou à travers le dispositif de service (12 - 15).

7. Procédé selon l'une quelconque des revendications précédentes,
**caractérisé en ce**
**que** pour déterminer au moins une partie de l'itinéraire de navigation qui concerne l'atteinte du dispositif de service (12 - 15), des informations de dispositif de service supplémentaires décrivant le dispositif de service (12 - 15) sont transmises par le dispositif de calcul (3) sur demande du dispositif de navigation (5).

8. Procédé selon l'une quelconque des revendications précédentes,
**caractérisé en ce**
**que** le dispositif de navigation (5) détermine plusieurs itinéraires de navigation possibles et les évalue, en particulier selon une fonction de coût.

9. Procédé selon l'une quelconque des revendications précédentes,
**caractérisé en ce**
**que** des données d'itinéraire de navigation décrivant l'itinéraire de navigation, en particulier un itinéraire de navigation évalué au mieux ou un itinéraire de navigation sélectionné par un occupant du véhicule (2), sont fournies à un dispositif de commande de trajectoire (9) et/ou un dispositif de planification de trajectoire (8) du véhicule (2).

10. Procédé selon l'une quelconque des revendications précédentes,
**caractérisé en ce**
**qu'**un véhicule à moteur ou un moyen de transport sans conducteur ou un aéronef est utilisé en tant que véhicule (2).

11. Véhicule comprenant un dispositif de communication (4) pour la communication de données sans fil avec un dispositif de calcul (3) externe au véhicule et un dispositif de navigation (5) connecté au dispositif de communication (4), dans lequel le véhicule (2) est conçu pour exécuter un procédé selon l'une quelconque des revendications précédentes, dans lequel le dispositif de navigation (5) est conçu pour déterminer des données de réseau routier décrivant des segments routiers (24 - 32) d'un réseau routier et leurs liaisons à partir de données de réseau routier transmises par le dispositif de calcul (3), lesquelles données de réseau routier décrivent au moins une station de service (11) comprenant un dispositif de service (12 - 15), lequel train de segments routiers est nécessaire pour atteindre une position cible (34) à partir d'une position de départ (33), après quoi le dispositif de navigation (5) demande au dispositif de calcul (3), pour au moins un segment routier (24 - 32) du train de segments routiers appartenant à l'au moins un segment routier (24 - 32) du train de segments routiers, de transmettre des informations de segment routier appartenant à l'au moins un segment routier (24 - 32) du train de segments routiers et relatives à la praticabilité du segment routier (24 - 32), lesquelles informations de segment routier décrivent une forme géométrique du segment routier (24 - 32) et/ou une trajectoire de référence pour le véhicule (2) le long du segment routier (24 - 32) et/ou comprennent des informations sur des caractéristiques de localisation pour le véhicule (2) et, après la transmission, pour vérifier la praticabilité du train de segments routiers pour le véhicule (2) en tenant compte des informations de segment routier transmises après la sollicitation du dispositif de navigation (5) par le dispositif de calcul (3) et pour déterminer un itinéraire de navigation dérivé d'un train de segments routiers qui a été vérifié comme praticable en tenant compte des informations de segment routier.

12. Dispositif de calcul qui est conçu pour mettre en œuvre un procédé selon l'une quelconque des revendications 1 à 10, dans lequel le dispositif de calcul (3) est conçu pour transmettre à un dispositif de navigation (5) d'un véhicule (2) des segments routiers (24 - 32) d'un réseau routier et des données de réseau routier décrivant des liaisons entre eux, lesquelles données de réseau routier décrivent au moins une station de service (11) comprenant un dispositif de service (12 - 15) et, sur demande du dispositif de navigation (5), pour au moins un segment routier (24 - 32) du train de segments routiers, pour transmettre au dispositif de navigation (5) des informations de segment routier appartenant à l'au moins un segment routier (24 - 32) du train de segments routiers et relatives à la praticabilité du segment routier (24 - 32), lesquelles informations de segment routier décrivent une forme géométrique du segment routier (24 - 32) et/ou une trajectoire de référence pour le véhicule (2) le long du segment routier (24 - 32) et/ou comprennent des informations sur des caractéristiques de localisation pour le véhicule (2).
